# EUROPÄISCHE PATENTSCHRIFT

(11) **EP 1 543 721 B1**
(45) Veröffentlichungstag und Bekanntmachung des Hinweises auf die Patenterteilung: **29.12.2010**
(21) Anmeldenummer: 04028507.4
(22) Anmeldetag: 02.12.2004
(51) Int. Cl.: A01K 29/00

(54) **Verfahren und Vorrichtung zur Überwachung des Gesundheitszustandes von Tieren**
Method and device for monitoring the health of animals
Procédé et ensemble de surveillance de l'etat de santé d'animaux

(30) Priorität: 04.12.2003 DE 10356538
(43) Veröffentlichungstag der Anmeldung: 22.06.2005
(73) Patentinhaber: Gantner Pigeon Systems GmbH, 6780 Schruns (AT)
(72) Erfinder: Gamon, Werner, 6780 Schruns (AT); Gantner, Michael, 6780 Schruns (AT)
(74) Vertreter: Riebling, Peter

(56) Entgegenhaltungen:
- WO-A-02/060244
- WO-A-03/051108
- DE-A1- 3 610 960
- US-A- 4 532 892
- US-A- 5 901 660
- US-B1- 6 497 197
- US-B1- 6 569 092

## Beschreibung

Die Erfindung betrifft ein Verfahren zur Überwachung des Gesundheitszustands von Tauben, nach dem Oberbegriff des unabhängigen Patentanspruches 1, sowie eine Vorrichtung arbeitend nach dem Verfahren.

In der landwirtschaftlichen Tierhaltung oder auch bei privaten Tierzüchtern, z.B. Taubenzüchtern, wird der Gesundheitszustand der Tiere in erster Linie durch Beobachtung der Tiere überwacht, wobei bei einem auffälligen Verhalten weitere Maßnahmen ergriffen werden oder aber der Tierarzt eingeschaltet wird.

Besitzt ein Tierhalter eine großen Anzahl von Tieren ist es jedoch schwierig, jedes einzelne Tier und dessen Verhalten regelmäßig zu beobachten, um anbahnende Krankheiten frühzeitig erkennen zu können.

Mit der US, 6,497,197 B1 wird eine Trinkwanne zur Verabreichung von Medikamenten an ein zu behandelndes Tier offenbart, welche eine Trinkschale und einen damit verbundenen Wasseranschluss über eine Wasseranschlussleitung aufweist, wobei die Wasseranschlussleitung ein Ventil zur kontrollierten Verabreichung von Wasser in die Trinkschale aufweist und die Funktion des Ventils durch einen Hebel geregelt ist. Eine Vielzahl von Medikamentenbehälter sind mit der Wasseranschlussleitung für jede Verabreichung von erwünschten Medikamenten verbunden. Jeder einzelne Behälter weist ein zugehöriges Regelventil auf, welches mit einem Computer verbunden ist, um das zugehörige Regelventil zu betätigen und eine automatische Verabreichung von Medikamenten einer erwünschten Menge von den Medikamentenbehältern in die Wasseranschlussleitung zu ermöglichen.

Diese Erfindung weist folgende Nachteile auf:
- fehlende Ermittlung der Umgebungstemperatur und Luftfeuchtigkeit zum genauen Vergleich in Langzeitüberwachungen;
- fehlende Überwachung der Festnahrungsaufnahme und Aufnahme von Feststoffmedikamenten, da lediglich die Wasseraufnahme überwacht wird;
- fehlende Mengenüberwachung der Nahrungsaufnahme durch zum Beispiel Gewichtserfassung des Tieres vor- und nach der Nahrungsaufnahme.

Mit der US 6,569,092 B1 wird ein Verfahren und eine Vorrichtung zur Verfolgung der Bewegungen von Tieren, wenn sich die Tiere von Ort zu Ort bewegen während der Entwicklung, wobei die Tiere unter Beobachtung; Verfolgung und Dauer ihrer Position identifiziert werden und für jedes identifizierte Tier an jeder Position anwendet, während diese Ihre Position verändern und Daten erzeugt, welche den Bewegungsverlauf darstellen.

Diese Erfindung weist den Nachteil auf, dass hier zwar die Positionierung der einzelnen Tiere erfasst wird, wenn Sie Ihre Position ändern und sich in der Nähe von bereits kranken Tieren befinden, jedoch eine medikamentöse Behandlung über eine Futteraufnahme nicht durchführbar ist.

Mit der US 5,901,660 wird ein Kommunikationssystem zur Positionierung und Selektierung von Transponder tragenden Tieren offenbart, wobei nach der Ermittlung einer Adresse des Tieres der entsprechende Transponder eine Verbindung mittels einem Signal unterschiedlicher Frequenzen zu einer Leitung herstellt und die Daten des Tieres sendet.

Diese Erfindung weist den Nachteil auf, dass lediglich eine Überwachung der Futteraufnahme der Tiere durchgeführt wird, wobei eine Gesundheitsüberwachung dieser Druckschrift nicht zu entnehmen ist.

Mit der US 4,532,892 wird ein System zur Fütterung und Überwachung von Tieren in einer Vielzahl angrenzender Viehstallungen offenbart, wobei die Tiere mittels eines codierten Identifizierungssignal eines elektronischen Identitätsmittel und den in den Stallungen angeordneten Receivern identifiziert werden und das identifizierte Tier entsprechend seiner Futterbedürfnisse mit Futter versorgt wird, welches mittels einem zentralen Computer unmittelbar an das Tier abgegeben wird. Zusätzlich wird der Futterverbrauch, die Milchproduktion und eine Körpertemperatur erfasst und gespeichert. Die Beobachtung und ein Diagnose-Programm wird durch den Zentral-Computer ausgeführt, um herauszufinden, ob ein Tier erhitzt ist oder unter einer Milchdrüsenentzündung leidet.

Diese Erfindung weist nachfolgende Nachteile auf:
- fehlende Ermittlung der Umgebungstemperatur und Luftfeuchtigkeit für den Vergleich in Langzeitüberwachungen;
- fehlende Ermittlung der Nahrungsaufnahmemenge, zum Beispiel durch Gewichtsmessung des Tieres vor- und nach der Nahrungsaufnahme.

Mit der WO 03/051108 A2 wird ein Verfahren und ein System zur automatischen Identifikation und Positionsbestimmung des Viehbestandes offenbart, wobei die erfassten Daten des Verfahrens vorteilhaft zur frühzeitigen Bestimmung von gefährdeten oder betroffenen verschiedener Krankheitsbedingungen verwendet werden. Hierzu wird eine Beobachtung der Tiere durch eine automatische Identifikation und Positionsbestimmung in einem festgelegten Bereich oder Position durchgeführt, um zum Beispiel eine frühzeitige Identifikation derartiger Dinge, welche Glukosemangel oder Unterzuckerung sein können, durchzuführen mittels Ausschöpfung von Übereinstimmungen zwischen den erfassten Daten unter sorgfältiger Betrachtung der Zeit und der Aufenthaltsdauer der Tiere an dem Futtertrog.

Diese Erfindung weist folgende Nachteile auf:
- fehlende Überwachung der Häufigkeit und Zeitdauer der Nahrungsaufnahme;
- fehlende Ermittlung der Umgebungstemperatur und Luftfeuchtigkeit für den Vergleich in Langzeitüberwachungen;
- fehlende Ermittlung der Nahrungsaufnahmemenge durch zum Beispiel Gewichtsmessung des Tieres vor- und nach der Nahrungsaufnahme.

Es ist daher die Aufgabe der vorliegenden Erfindung, ein Verfahren und eine Vorrichtung zur Bestimmung des Gesundheitszustands von Tieren anzugeben, das automatisch arbeitet und den Tierhalter rechtzeitig auf mögliche Gesundheitsstörungen der Tiere aufmerksam macht.

Diese Aufgabe wird erfindungsgemäß durch die Merkmale des unabhängigen Patentanspruches 1 gelöst.

Vorteilhafte Ausgestaltungen und Weiterbildungen der Erfindung sind in den abhängigen Patentansprüchen angegeben.

Erfindungsgemäß befindet sich ein Wasser-, und/oder Nahrungsmittelbehälter bzw. spender innerhalb eines begrenzten Sensorfelds, und jedes Mal wenn ein überwachtes Tier d.h. eine Taube, zum Nahrungsspender geht, wird der Zeitpunkt und damit die Häufigkeit, sowie die Dauer der Nahrungsaufnahme registriert und gespeichert. Diese Daten werden ausgewertet und erfindungsgemäß zur Bestimmung der gesundheitlichen

Verfassung des Tieres herangezogen. Auf diese Weise können Krankheiten früh erkannt werden. Wenn z.B. ein Tier überdurchschnittlich viel oder aber sehr wenig trinkt bzw. frisst dann kann das ein Anzeichen auf eine Krankheit sein. Anhand einer am Tier angebrachten individuellen elektronischen Markierung kann jedes überwachte Tier erkannt und von anderen unterschieden werden.

Das beschriebene elektronische Gesundheitssystem nimmt also verschiedene Messdaten eines überwachten Tieres, um daraus auf eventuelle Krankheiten zu schließen. Bei den Messdaten handelt es sich um Messdaten über das Verhalten und Messdaten über die Körperfunktionen des Tieres.

Bisher war im Bereich der Geflügelzucht, insbesondere der Zucht von Ziervögeln und Wettflugtauben, kein elektronisches System bekannt das gesundheitsrelevante Daten von Tieren, wie z. B. die Häufigkeit der Nahrungsaufnahme, automatisch aufnimmt und verarbeitet. Bisher konnte man nur aufgrund von Beobachtungen des Verhaltens des Tieres auf verschiedenen Krankheitssymptome zurückschließen.

In einer bevorzugten Ausgestaltung wird nicht nur die Anzahl und die Dauer der Nahrungsaufnahme registriert, sonder zusätzlich auch die Menge der aufgenommenen Nahrung, z.B. indem die vom Nahrungsmittelbehälter abgegebene Nahrungs- /Wassermenge erfasst wird. Diese Daten verbessern die Bestimmung der gesundheitlichen Verfassung und Früherkennung von Krankheiten.

Ferner wird erfindungsgemäß durch separate Temperatursensoren die Temperatur der Füße des Tieres gemessen werden. Diese Information liefert wertvolle Informationen über die Körpertemperatur und somit die gesundheitliche Verfassung des Tieres.

Zusätzlich kann noch die Raumtemperatur und Luftfeuchtigkeit aufgenommen werden. Anhand dieser Messwerte kann auch ein für die jeweilige Tierart optimales Raumklima geschaffen und aufrecht erhalten werden.

Sämtliche erfassten Daten werden an eine Datenerfassungs- und Verarbeitungseinrichtung weitergeleitet und können außerdem mit einer Software an einem Personal Computer weiterverarbeitet und analysiert werden.

Es ist vorgesehen, insbesondere folgende Daten zu erfassen und auszuwerten:
■ Häufigkeit der Nahrungsaufnahme jedes einzelnen Tieres
■ Verweildauer am Nahrungsbehälter
■ Menge der Nahrungsaufnahme
■ Vergleich der Nahrungsaufnahme von verschiedenen Tieren
■ Erkennung von Tieren mit Auffälligkeiten bei der Nahrungsaufnahme, z.B. zu geringe oder übermäßige Nahrungsaufnahme.
■ Langzeitanalyse der Messdaten aller überwachten Tiere
■ Langzeitaufnahme der Umwelteinflüsse (Temperatur, Luftfeuchtigkeit)
■ Graphische Anzeige bzw. Ausdruck der Daten
■ Erfassung der Körpertemperatur und/oder Puls eines Tieres über die Füße des Tieres oder über Strahlungssensoren
■ Erfassung des Körpergewichts des Tieres

Ein Ausführungsbeispiel der Erfindung wird nachfolgend anhand der Zeichnungsfigur näher erläutert. Hieraus ergeben sich weitere Merkmale, Vorteile und Anwendungsmöglichkeiten der Erfindung.

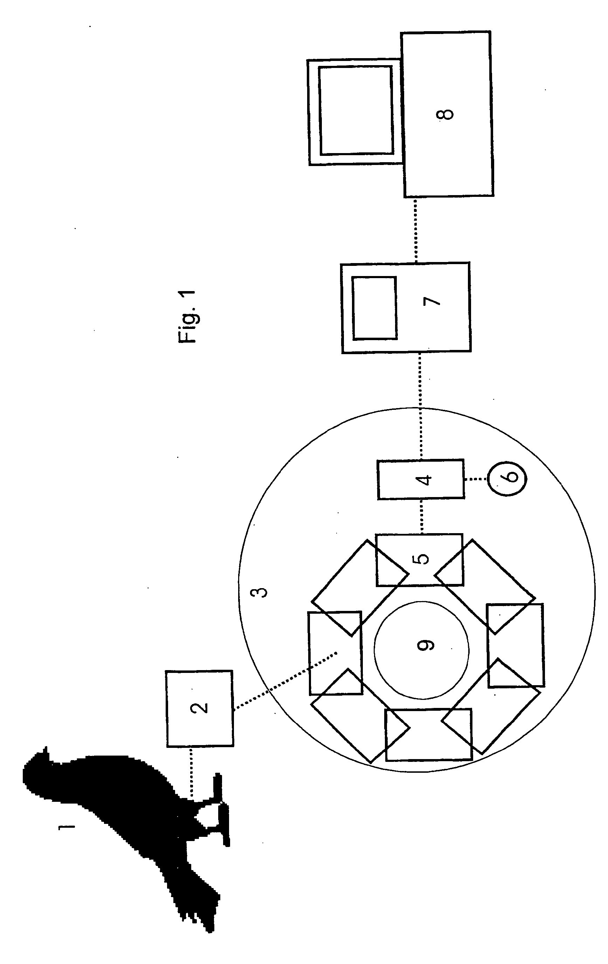

Figur 1 zeigt schematisch den Aufbau der erfindungsgemäßen Vorrichtung zur Überwachung des Gesundheitszustandes von Zier- bzw. Wettflugtauben 1, über die der Taubenzüchter ständig gesundheitliche Informationen erhalten möchte.

Damit eine individuelle und automatische Überwachung durchgeführt werden kann, ist jedes Tier mit einer unverwechselbaren elektronischen Markierung 2 ausgerüstet. Diese elektronische Markierung 2, nachfolgend auch als Identifikationstag bezeichnet, kann bei einer Zuchttaube z. B. als herkömmlicher elektronischer Taubenring am Fuß der Taube angebracht sein und umfasst einen Transponderchip, auf dem individuelle Daten des Tieres gespeichert sind. Die Daten der elektronischen Markierung 2 können in bekannter Weise mittels eines elektromagnetischen Feldes ausgelesen werden. Derartige elektronischen Taubenringe werden seit langem bei der Durchführung von Taubenwettflügen zur Identifikation der einzelnen Tauben verwendet. Derartige Konstatiersysteme sind daher aus dem Stand der Technik wohlbekannt. Auch im Falle der Erfindung dient die Markierung 2 der Taube zur Erfassung der Anwesenheit und Identifikation einer Taube 1.

Die Gesundheitsüberwachung der Tauben wird innerhalb eines begrenzten Sensorfeldes 3 durchgeführt, das sich z. B. im Taubenschlag befindet. Im Bereich des Sensorfeldes 3 ist eine Antennenanordnung angeordnet, die aus mehreren Empfangsantennen 5 zum Erfassen der Transponderdaten der Markierung 2 besteht. Die Empfangsantennen 5 dienen zur Registrierung jedes einzelnen Tieres 1, das sich auf dem Sensorfeld 3 befindet und zur Messung der Häufigkeit und Verweildauer des einzelnen Tieres 1 auf dem Sensorfeld 3. Die Empfangsantennen 5 sind vorzugsweise kreisförmig um den Nahrungsmittelbehälter angeordnet, wobei sich die Empfangesbereiche der Antennen 5 überlappen können. Selbstverständlich können die Empfangsantennen auch als Rechteck oder in einer anderen Form angeordnet sein. Es kann auch eine quasi "tunnelförmige" Anordnung gewählt werden.

Durch eine Empfangselektronik 4 werden die Empfangsantennen 5 angesteuert und die empfangenen Daten aufgenommen. Der Empfangsbereich der Antennenanordnung 5 überstreicht das Sensorfeld 3, so dass jede innerhalb des Sensorfeldes 3 befindliche Taube 1 erfasst und identifiziert werden kann.

Durch die Antennenanordnung wird der Zeitpunkt und Verweildauer des Identifikationstags 2 bzw. der entsprechenden Taube innerhalb des Sensorfeldes 3 aufgenommen.

Innerhalb des Sensorfelds 3 befindet sich ein Nahrungsmittelbehälter 9, z. B. ein herkömmlicher Trink- bzw. Fressnapf, um einerseits das Tier 1 auf das Sensorfeld zu locken und andererseits Daten über die Häufigkeit der Wasser-, und/oder Futteraufnahme jedes Tieres zu bekommen. Begibt sich ein Tier 1 zum Nahrungsmittelbehälter, so muss es zwangsläufig das Empfangsfeld der Antennen 5 passieren. Dadurch wird der Identifikationstag 2 des Tieres 1 bei jeder Nahrungsaufnahme durch die Empfangsantennen 5 ausgelesen, und zwar zwei mal. Durch die überlappende und lückenlose Abdeckung des Sensorfeldes 3 durch die Empfangsantennen, insbesondere um den Bereich des Nahrungsmittelbehälters 9, kann ein sicheres Registrieren der Nahrungsaufnahmezeiten des Tieres 1 vorgenommen werden.

Das Sensorfeld 3 kann verschiedene andere Sensoren 6 beinhalten, um zusätzlich Daten über das überwachte Tier 1 zu sammeln.

Am Nahrungsmittelbehälter 9 können z.B. Sensoren angeordnet sein, welche die vom jeweiligen Tier aufgenommene Nahrungsmenge bzw. die an das jeweilige Tier abgegebene Nahrungsmittelmenge erfassen.

Ferner sind erfindungsgemäß Temperatursensoren zur Erfassung der Körpertemperatur der Tiere 1 vorgesehen. Bei Tauben 1 kann dies durch eine Sensorplatte erfolgen, mit der die Temperatur der Haut an den Füßen der Taube 1 gemessen wird. Mit dieser Anordnung kann auch der Puls des Tieres 1 erfasst werden. Die Körpertemperatur des Tieres 1 kann aber auch durch einen Strahlungssensor erfasst werden.

Zusätzlich können Umgebungstemperatur und Luftfeuchtigkeit gemessen werden.

Die Elektronik 4 des Sensorfelds 3 kommuniziert mit den Empfangsantennen 5 und den Sensoren 6 und nimmt die erfassten Daten auf und speichert sie bis zur Abfrage durch ein Verarbeitungssystem 7 oder einen Personal Computer 8 ab.

Durch die Antennenanordnung 5 und die Sensoren 6 lassen sich im wesentlichen folgende Daten gewinnen:
■ Häufigkeit der Nahrungsaufnahme, Fressen und Trinken
■ Nahrungsaufnahmemenge
■ Körpertemperatur des Tieres und/oder Puls
■ Körpergewicht
■ Raumtemperatur
■ Luftfeuchtigkeit

Es können gleichzeitig die Daten von mehreren Tieren 1, die sich innerhalb des Sensorfelds 3 befinden, aufgenommen werden.

Das Datenerfassungs- und Verarbeitungssystem 7 kann in der Elektronik 4 des Sensorfelds 3 integriert sein oder als separates Gerät realisiert werden. Dieses Gerät 7 kommuniziert mit der Elektronik 4 des Sensorfelds 3 und erfasst sämtliche Daten von jedem überwachten Tier 1. Diese Daten werden gesammelt und gegebenenfalls am Datenerfassungs- und Verarbeitungssystem 7 angezeigt.

Das Datenerfassungs- und Verarbeitungssystem 7 kann in bestehende elektronische Geräte, wie sie z.B. bereits im Taubensport zum konstatieren von Wettkämpfen verwendet werden, integriert werden. Zusätzliche bietet das Datenerfassungs- und Verarbeitungssystem 7 ein oder mehrere Schnittstellen zu anderen Systemen, z. B. einem Personal Computer 8, für weitergehende Analysen und Auswertungen.

Um die erfassten Daten auch an einem Personal Computer 8 zu verarbeiten bzw. mit Programmen andere Anbieter zu verwenden, kommuniziert eine Software im PC 8 mit dem Datenerfassungs- und Verarbeitungssystem 7 oder gegebenenfalls direkt mit der mit der Elektronik 4 und sammelt sämtliche Daten der überwachten Tiere 1. Diese Daten können dann angezeigt bzw. analysiert werden. Das erfindungsgemäße Überwachungssystem kann aber auch ohne diese Software verwendet werden.

### Liste der Bezugszeichen

- 1: Überwachtes Tier (Taube)
- 2: Identifikationstag
- 3: Sensorfeld
- 4: Elektronik des Sensorfelds
- 5: Empfangsantennen
- 6: Diverse Sensoren
- 7: Datenerfassungs- und Verarbeitungssystem
- 8: PC mit spezieller Software für weiterleitende Auswertungen
- 9: Nahrungsmittelbehälter

## Patentansprüche

1. Verfahren zur Überwachung des Gesundheitszustands von Tauben (1),
wobei Daten über die Häufigkeit und Dauer der Wasser- und/oder Nahrungsaufnahme jedes überwachten Tieres (1) innerhalb eines begrenzten Sensorfeldes (3) erfasst werden, und diese Daten zur Bestimmung der gesundheitlichen Verfassung des Tieres verwendet werden, und wobei die einzelnen Tiere (1) innerhalb des Sensorfeldes (3) anhand einer vom Tier (1) mitgeführten individuellen elektronischen Markierung (2) identifiziert werden, **dadurch gekennzeichnet, dass** die Körpertemperatur jedes Tieres (1) durch Hauttemperaturmessung an den Füßen des Tieres (1) und/oder durch Wärmestrahlungsmessung des Körpers des Tieres (1) erfasst wird.

2. Verfahren nach Anspruch 1, **dadurch gekennzeichnet, dass** die an das Tier (1) abgegebene Menge an Nahrungsmitteln erfasst wird.

3. Verfahren nach einem der vorhergehenden Ansprüche, **dadurch gekennzeichnet, dass** der Puls eines Tieres (1) an den Füßen des Tieres (1) erfasst wird.

4. Verfahren nach einem der vorhergehenden Ansprüche, **dadurch gekennzeichnet, dass** die Umgebungstemperatur und Luftfeuchtigkeit im Bereich des Sensorfeldes (3) erfasst wird.

5. Verfahren nach einem der vorhergehenden Ansprüche, **dadurch gekennzeichnet, dass** Daten von mehreren Tieren (1) gleichzeitig erfasst werden.

6. Verfahren nach einem der vorhergehenden Ansprüche, **dadurch gekennzeichnet, dass** die einem Tier (1) zugeordneten Messdaten einem Datenerfassungs- und Verarbeitungssystem (7) zugeführt, dort weiterverarbeitet und angezeigt werden.

7. Vorrichtung zur Überwachung des Gesundheitszustands von Tieren, arbeitend nach dem Verfahren gemäß einem der Ansprüche 1 bis 8, wobei eine Antennenanordnung (5) mit zugeordnetem Empfangssystem (4) zum Auslesen der auf den elektronischen Markierungen (2) gespeicherten Daten vorgesehen ist, **dadurch gekennzeichnet, dass** zumindest die Antennenanordnung (5) und die Markierungen (2) Teil eines herkömmlichen Konstatierungssystems für den Wettflugtaubensport ist.

## Claims

1. Method for monitoring the state of health of pigeons (1), data about the frequency and duration of the water and/or food consumption of each monitored animal (1) being detected within a limited sensor field (3), and these data being used to determine the health condition of the animal, and the individual animals (1) within the sensor field (3) being identified with the aid of an individual electronic marking (2) carried by the animal (1), **characterised in that** the body temperature of each animal (1) is detected by measuring the skin temperature on the feet of the animal (1) and/or by measuring the heat radiation of the body of the animal (1).

2. Method according to claim 1, **characterised in that** the quantity of food given to the animal (1) is detected.

3. Method according to either of the preceding claims, **characterised in that** the pulse of an animal (1) is detected on the feet of the animal (1).

4. Method according to any one of the preceding claims, **characterised in that** the ambient temperature and air humidity in the region of the sensor field (3) are detected.

5. Method according to any one of the preceding claims, **characterised in that** data from a plurality of animals (1) are detected simultaneously.

6. Method according to any one of the preceding claims, **characterised in that** the measurement data associated with an animal (1) are supplied to a data detection and processing system (7), further processed there and displayed.

7. Device for monitoring the state of health of animals, working in accordance with the method according to any one of claims 1 to 8, an antenna arrangement (5) with an associated receiving system (4) for reading out the data stored on the electronic markings (2) being provided, **characterised in that** at least the antenna arrangement (5) and the markings (2) are part of a conventional verification system for the sport of racing pigeons.

## Revendications

1. Procédé pour surveiller l'état de santé de pigeons (1), selon lequel des données sur la fréquence et la durée de l'ingestion d'eau et/ou de nourriture par chaque animal surveillé (1) sont relevées à l'intérieur d'un champ de capteurs (3) limité, et ces données sont utilisées pour définir la condition physique de l'animal, et selon lequel les animaux individuels (1) sont identifiés à l'intérieur du champ de capteurs (3) à l'aide d'un marquage électronique individuel (2) porté par l'animal (1), **caractérisé en ce que** la température du corps de chaque animal (1) est relevée grâce à une prise de température de la peau sur les pattes de l'animal (1) et/ou grâce à une mesure du rayonnement thermique du corps de l'animal (1).

2. Procédé selon la revendication 1, **caractérisé en ce que** la quantité d'aliments donnée à l'animal (1) est relevée.

3. Procédé selon l'une des revendications précédentes, **caractérisé en ce que** le pouls d'un animal (1) est relevé sur ses pattes.

4. Procédé selon l'une des revendications précédentes, **caractérisé en ce que** la température ambiante et l'humidité de l'air sont relevées dans la zone du champ de capteurs (3).

5. Procédé selon l'une des revendications précédentes, **caractérisé en ce que** des données concernant plusieurs animaux (1) sont relevées simultanément.

6. Procédé selon l'une des revendications précédentes, **caractérisé en ce que** les données de mesure attribuées à un animal (1) sont transmises à un système de saisie de données et de traitement (7), dans lequel elles sont traitées et affichées.

7. Dispositif pour surveiller l'état de santé d'animaux, fonctionnant suivant le procédé selon l'une des revendications 1 à 6, dans lequel il est prévu un dispositif formant antenne (5) avec un système de réception (4) associé, pour lire les données mises en mémoire sur les marquages électroniques (2), **caractérisé en ce que** le dispositif formant antenne (5) et les marquages (2), au moins, font partie d'un système de constatation classique pour la colombophilie.
